# FASCICULE DE BREVET EUROPEEN

(11) **EP 1 825 633 B1**
(45) Date de publication et mention de la délivrance du brevet: **30.01.2008**
(21) Numéro de dépôt: 05821768.8
(22) Date de dépôt: 15.12.2005
(51) Int. Cl.: H04L 9/08

(54) **SYSTEME DE DISTRIBUTION QUANTIQUE DE CLE DE CRYPTAGE A VARIABLES CONTINUES**
KONTINUIERLICH VARIABLES SYSTEM ZUR VERSCHLÜSSELUNGSSCHLÜSSEL-QUANTENDISTRIBUTION
CONTINUOUSLY-VARIABLE SYSTEM FOR ENCRYPTION KEY QUANTUM DISTRIBUTION

(30) Priorité: 15.12.2004 FR 0413337
(43) Date de publication de la demande: 29.08.2007
(73) Titulaire: THALES, 92200 Neuilly sur Seine (FR); Centre National de la Recherche Scientifique, 75016 Paris (FR)
(72) Inventeur: LODEWYCK, Jérôme, F-75005 Paris (FR); DEBUISSCHERT, Thierry, F-91400 Orsay (FR); TUALLE-BROURI, Rosa, F-62160 Antony (FR); GRANGIER, Philippe, F-78470 Saint Remy Les Chevreuse (FR)
(74) Mandataire: Esselin, Sophie
(86) Numéro de dépôt international: PCT/EP2005/056813
(87) Numéro de publication internationale: WO 2006/064037

(56) Documents cités:
- US-A- 5 438 444
- US-A1- 2004 109 564
- US-B1- 6 529 601
- GROSSHANS F ET AL: "Continuous variable quantum cryptography using coherent states" PHYSICAL REVIEW LETTERS APS USA, vol. 88, no. 5, 4 février 2002 (2002-02-04), pages 057902/1-4, XP002337784 ISSN: 0031-9007 cité dans la demande
- F GROSSHANS, P GRANGIER: "Reverse reconciliation protocols for quantum cryptography with continuous variables" PROCEEDINGS OF THE 6TH INTERNATIONAL CONFERENCE ON QUANTUM COMMUNICATION, MEASUREMENT AND COMPUTING, décembre 2002 (2002-12), page 351, XP008050259 cité dans la demande

## Description

La présente invention concerne un système de distribution quantique d'une clé de cryptage, généralement noté système QKD selon l'acronyme anglo-saxon pour *"Quantum Key Distribution",* utilisant des variables continues.

Elle s'applique notamment aux systèmes de cryptographie symétriques ou à clé secrète. Dans ces systèmes, il s'agit de permettre à deux parties autorisées d'échanger entre elles des messages sous forme codée à l'aide d'un algorithme à clé secrète. Une clé secrète est formée de façon habituelle d'une suite aléatoire de bits. L'expéditeur et le destinataire du message doivent échanger cette clé secrète pour pouvoir ensuite réaliser des opérations de cryptographie, par exemple, chiffrement, déchiffrement, authentification de messages.

La sécurité d'un algorithme symétrique repose ainsi intégralement sur la clé qui doit être gardée secrète.

Ainsi, le problème posé par ces algorithmes symétriques, est qu'il faut que les deux parties s'échangent la clé sans que celle-ci puisse être détectée par un tiers espionnant les échanges entre l'expéditeur et le destinataire.

Un système de distribution quantique d'une clé de cryptage permet de résoudre ce problème de la distribution des clés de façon sûre en exploitant les lois de la mécanique quantique.

Selon une terminologie usuelle en cryptographie, l'émetteur (ou expéditeur) est appelé "Alice", le destinataire ou récepteur est appelé "Bob" et l'espion est appelé " Eve ". Les moyens d'émission et de réception, associés au protocole de cryptage permettent de quantifier l'information acquise par l'espion.

Un système de distribution quantique nécessite habituellement deux canaux de transmission : un canal quantique, pour transmettre les informations "quantiques" et un canal public authentifié. Ce canal public authentifié permet à Alice et Bob de communiquer. Il peut être écouté par Eve mais sans que Eve puisse modifier quoi que ce soit.

Le processus général d'un tel système de distribution quantique d'une clé de cryptage comporte les étapes suivantes :
-1) émission : Alice envoie par le canal de transmission quantique, un signal qui porte une information quantique;
-2) réception : Bob mesure l'information quantique du signal reçu;
-3) réconciliation : Alice et Bob effectuent un traitement de leurs résultats, par le canal public authentifié, selon un protocole de réconciliation déterminé. Ils évaluent en particulier le taux d'erreur de la transmission quantique, qui les renseigne sur la quantité d'information dont a éventuellement pu s'emparer un espion. En effet, la présence d'une écoute sur la chaîne de transmission entre Alice et Bob provoque nécessairement une modification de l'information quantique, et par conséquent des erreurs observables.

A l'issue du protocole de réconciliation, Alice et Bob peuvent avoir une clé secrète en commun, dont le nombre de bits est une fonction inverse du taux d'erreur. Ils peuvent ensuite utiliser cette clé pour se transmettre des messages cryptés au moyen d'un algorithme de cryptographie à clé secrète, à des fins de confidentialité ou d'authentification ou autres.

Ces principes très généraux étant rappelés, l'invention concerne plus particulièrement un système de distribution quantique de clé, qui utilise des variables continues. On parle de cryptographie quantique à variables continues ou cryptographie QCV (pour *Quantum Continuous Variable).* Un tel système utilise des impulsions à grand nombre de photons (typiquement 100) ainsi qu'une détection homodyne cohérente, par opposition aux systèmes qui opèrent en comptage de photons.

La détection homodyne cohérente est plus facile à mettre en oeuvre que le comptage de photons, notamment parce qu'elle utilise des photodiodes classiques qui ont une efficacité quantique proche de 100%, alors que celle des compteurs de photons est de l'ordre de 10%. Un système à comptage de photons doit utiliser des photodiodes sensibles à un quantum individuel. Un système de distribution quantique de clé à variables continues est particulièrement intéressant à mettre en oeuvre dans un système de télécommunication optique cohérente.

Pour être sûr, le système de distribution doit mettre en oeuvre un protocole de réconciliation au terme duquel Alice et Bob ont un certain nombre de bits en commun et un protocole d'amplification de confidentialité (*"Privacy amplification"*) au terme duquel Alice et Bob possèdent une clé secrète. Des détails sur ces protocoles peuvent notamment être trouvés dans les publications de Frédéric Grosshans et Philippe Grangier, ayant pour titres "Continuous variable quantum cryptography using coherent states" publiée le 4 février 2002, au Volume 88, Numéro 5 des "PHYSICAL REVIEW LETTERS", et *"*Reverse reconciliation protocols for quantum cryptography with continuous variables ", publiée p. 351 dans les "Proceedings of the 6th International Conference on Quantum Communication, Measurement and Computing", Rinton Press, Dec. 2002.

L'invention concerne plus particulièrement un système de distribution quantique d'une clé à variables continues, utilisant une modulation en amplitude et en phase, décrit dans le brevet US 2004/0109564 ayant pour titre *"high- rate quantum key distribution scheme relying on continuously phase and amplitude-modulated coherent light pulses".* On se reportera au texte de ce brevet pour tous les détails et explications sur les protocoles et algorithmes utilisés, en particulier les protocoles de réconciliation et d'amplification de secret, et sur la sécurité d'un tel système de distribution quantique.

De façon simplifiée, le système QCV de distribution quantique à variables continues décrit utilise une source de lumière cohérente de bonne qualité, telle qu'une diode laser de grande pureté spectrale associée à un atténuateur, tel que par exemple une lame partiellement réfléchissante. Le faisceau lumineux est découpé à haute cadence, en des impulsions de lumière intenses, qui comprennent chacune un grand nombre de photons. Ces impulsions de lumière ont les propriétés suivantes :
- propriété 1 : elles sont cohérentes, c'est à dire qu'elles sont monomodes en fréquence et fines spectralement;
- propriété 2 : elles sont dans un état cohérent au sens de la mécanique quantique : elles sont limitées par le bruit de photon *("shot noise")* à la fois pour les fluctuations de phase et d'amplitude.

Ces impulsions sont utilisées d'une part pour fournir un signal et un oscillateur local, qui va servir de référence de phase. Les impulsions de signal sont chacune modulées en phase et en amplitude par rapport à l'oscillateur local, et de façon aléatoire, selon une loi de distribution continue appropriée, telle qu'une gaussienne. En pratique, pour permettre la détection homodyne (ou cohérente), les impulsions de signal sont atténuées par rapport aux impulsions de l'oscillateur local. Comme ordre de grandeur, on aura, à titre d'exemple donné dans le brevet précité, jusqu'à 250 photons dans une impulsion de signal et 10⁸ photons dans une impulsion oscillateur local.

Le récepteur met donc en oeuvre une détection homodyne en régime impulsionnel.

On rappelle que dans le domaine quantique, la détection homodyne mesure une quadrature d'une impulsion de signal de faible intensité, en la faisant interférer avec un oscillateur local beaucoup plus intense, par exemple au moyen d'une lame semi-réfléchissante, et en mesurant l'intensité sur les deux voies de sortie obtenues. Cette mesure est typiquement effectuée par des photodiodes standards. Le signal de sortie de la détection est la différence des deux intensités mesurées par les photodiodes. Ce signal est proportionnel à la quadrature de l'impulsion signal.

Dans une détection homodyne impulsionnelle, l'oscillateur local échantillonne la valeur d'une quadrature de l'état cohérent de l'impulsion signal à l'instant où l'impulsion oscillateur local arrive sur la lame semi-réfléchissante.

Dans un exemple décrit dans le brevet précité, Bob et Alice choisissent une loi de distribution gaussienne pour chacune des deux quadratures. Pour chaque impulsion du signal, Alice sélectionne aléatoirement deux valeurs sur la loi de distribution gaussienne associée, pour commander la modulation de l'impulsion respectivement en phase et en amplitude. L'état cohérent de l'impulsion délivré par Alice est alors défini par les quadratures dont les valeurs sont aléatoires, et qui sont mémorisées par Alice. Les impulsions ainsi modulées du signal et les impulsions de l'oscillateur local sont transmises au dispositif de réception Bob. Bob choisit arbitrairement la phase de l'oscillateur local pour chaque impulsion de signal. Le détecteur homodyne fournit une mesure de la quadrature ainsi sélectionnée de l'état cohérent correspondant de chaque impulsion de signal.

Bob communique à Alice, par le canal public authentifié, quelle quadrature a été sélectionnée, pour chaque impulsion de signal. A l'issue du processus d'envoi d'un grand nombre d'impulsions, Alice et Bob partagent un grand nombre de variables aléatoires gaussiennes corrélées, dont le protocole de réconciliation et d'amplification de confidentialité vont extraire une clé privée.

Les différents protocoles mis en oeuvre dans un tel système ne seront pas détaillés plus avant. Toute description détaillée à ce sujet pourra notamment être trouvée dans les trois références citées ci-dessus.

Un tel système est très avantageux notamment en terme de débit d'information, permettant d'envisager des communications sécurisées à haut débit.

Un objet de la présente invention est une implémentation d'un tel système de distribution quantique de clé à variables continues dans un système de télécommunication optique cohérente, utilisant des fibres optiques standards du commerce, entre les différents dispositifs d'émission et de réception.

On rappelle qu'un système de télécommunication cohérente est un système qui utilise un oscillateur local.

Ainsi, l'invention concerne un système de distribution quantique de clé à variables continues, basé sur une modulation aléatoire de la phase et de l'amplitude d'impulsions de lumière cohérente, dont l'architecture est telle que la robustesse du système soit assurée dans le cas d'une connexion par fibre standard entre un émetteur Alice et un récepteur Bob, notamment pour des communications longue distance.

L'applicabilité d'un tel système de distribution à un système de télécommunication standard dépend de la simplicité de son architecture et de sa mise en oeuvre. Notamment les problèmes de réglages et d'alignement doivent pouvoir être résolus de manière simple.

Un problème qui se pose est le mode de transmission mis en oeuvre entre l'émetteur et le récepteur. L'oscillateur local et le signal doivent subir des perturbations identiques afin de conserver la référence de phase. Pour cela ils sont multiplexés dans la même fibre. Par analogie avec les systèmes de distribution de clé secrète à variables discrètes, on peut envisager d'utiliser un multiplexage fréquentiel ou un multiplexage des états de polarisation pour transmettre sur la même fibre optique de télécommunication, le signal et l'oscillateur local nécessaire à la référence de phase entre l'émetteur et le récepteur, pour permettre la détection cohérente.

Les systèmes dits à multiplexage fréquentiels, s'ils sont robustes, sont cependant complexes à mettre en oeuvre, puisqu'ils nécessitent des modulateurs synchronisés en émission et réception, pour les translations de fréquence.

Les systèmes à états de polarisation sont eux plus adaptés à des systèmes de télécommunication en espace libre. En effet, les fibres optiques du commerce utilisées dans les systèmes de télécommunication cohérente perturbent l'état de polarisation des impulsions de lumière, ce qui réduit la robustesse du système de distribution. Notamment de tels systèmes sont peu adaptés à des communications longue distance.

Un objet de l'invention est ainsi un système dont le mode de transmission entre l'émetteur et le récepteur participe de la robustesse et de la simplicité d'intégration à un système de télécommunication standard, et permet des transmissions optiques longue distance.

La sécurité d'un tel système de distribution repose exclusivement sur la possibilité de mesure du bruit quantique. Or la sécurité du protocole est directement conditionnée par les pertes apportées par les éléments de transmission, c'est-à-dire, notamment, les fibres du réseau de télécommunication, qui dégradent le rapport signal sur bruit.

Un problème technique qui se pose est notamment de concevoir un récepteur Bob, facilement intégrable à un réseau de télécommunication standard, qui soit limité au bruit quantique.

Plus généralement, un problème qui se pose est un système de distribution dont les différents éléments sont définis pour que le système soit conforme aux critères ci-dessus, c'est à dire facile à mettre en oeuvre, aisément intégrable et fiable, tout en opérant dans le régime quantique.

Une solution à ces différents problèmes a été trouvée dans l'invention, dans un système de distribution quantique d'une clé à variables continues utilisant un multiplexage temporel des impulsions signal et oscillateur local, et un récepteur défini pour permettre une détection homodyne en régime impulsionnel limitée par le bruit quantique. Associé à un émetteur qui, lui, connaît exactement les caractéristiques du signal envoyé, et une source d'impulsions de bonne qualité, on obtient un système qui résout les différents problèmes techniques indiqués.

L'invention concerne donc un système de distribution quantique d'une clé à variables continues comprenant un émetteur apte à choisir de manière aléatoire la phase et l'amplitude de chaque impulsion de lumière cohérente d'un signal, pour fournir un état cohérent défini par une première quadrature et une deuxième quadrature aléatoires, et à transmettre à un récepteur les impulsions du signal et un oscillateur local, le récepteur comprenant un détecteur homodyne pour mesurer une quadrature choisie aléatoirement d'une impulsion du signal, caractérisé en ce que
- l'émetteur comprend un dispositif de multiplexage temporel des impulsions du signal et de l'oscillateur local pour assurer la transmission sur une fibre optique des impulsions signal et oscillateur local vers le récepteur ; et en ce que
- le récepteur comprend :
   - un démultiplexeur, apte à envoyer les impulsions reçues, sur une première voie, ou sur une deuxième voie, lesdites voies étant appliquées en entrées du détecteur homodyne ; l'une desdites première et deuxième voies comprenant :

   - un modulateur de phase, permettant une sélection aléatoire par le détecteur homodyne d'une quadrature parmi la première et la deuxième quadrature d'un état cohérent d'une impulsion de signal;
   - une ligne à retard, pour resynchroniser les impulsions signal et oscillateur local.

L'invention concerne aussi un système de télécommunication optique cohérente comprenant au moins un émetteur et un récepteur d'un tel système de distribution de clé.

D'autres avantages et caractéristiques de l'invention apparaîtront plus clairement à la lecture de la description qui suit, faite à titre indicatif et non limitatif de l'invention et en référence aux dessins annexés, dans lesquels :
- la figure 1 illustre une architecture d'un système de distribution quantique d'une clé à variables continues selon l'invention;
- la figure 2 est un schéma-bloc d'un récepteur selon un premier mode de mise en oeuvre de l'invention ;
- la figure 3 illustre une variante de réalisation du récepteur de la figure 2 ;
- la figure 4a est un schéma-bloc d'un récepteur selon un deuxième mode de mise en oeuvre de l'invention ;-la figure 4b représente une variante de réalisation d'un récepteur selon le deuxième mode de mise en oeuvre de l'invention,
- la figure 5 illustre un exemple de réalisation d'un émetteur selon l'invention, et
- la figure 6 représente une variante de réalisation de la modulation de phase, dans l'émetteur illustré à la figure 5.

Dans un souci de clarté et de simplification, les éléments communs aux figures portent les mêmes références.

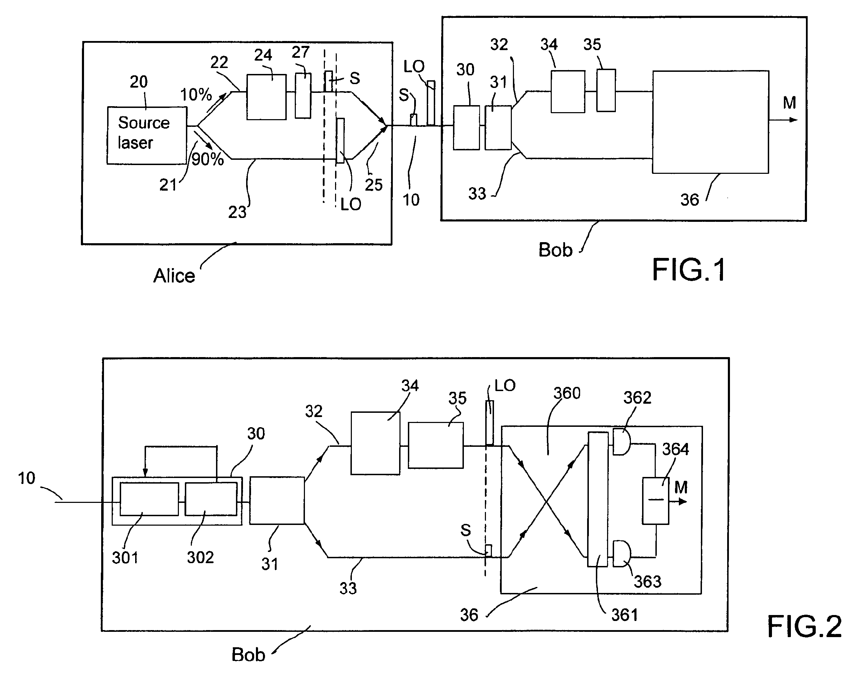

La figure 1 illustre de manière générale un système de distribution quantique de clé à variables continues selon l'invention.

Il comprend un émetteur Alice, et un récepteur Bob, reliés par une fibre optique standard 10. Sur cette fibre, l'émetteur Alice envoie des impulsions signal S modulées aléatoirement en phase et amplitude, et des impulsions oscillateur local LO, selon un mode de multiplexage temporel.

Dans le mode de réalisation représenté, Alice comprend une source d'impulsions de lumière cohérente 20.

Cette source 20 doit être de grande qualité pour fournir des impulsions de lumière cohérentes, et dans un état cohérent au sens de la mécanique quantique. Elle comprend typiquement une source de lumière, telle qu'un laser continu de grande pureté spectrale, typiquement quelques Mégahertz fournissant un faisceau de lumière polarisée et un modulateur d'amplitude fonctionnant à cadence élevée, pouvant aller jusqu'à quelques dizaines de gigahertz. Le modulateur permet de découper le faisceau en impulsions de lumière intenses, avec une largeur temporelle des impulsions qui peut être aussi petite que quelques nanosecondes. Le laser continu est par exemple une diode laser DFB ("Distributed Feedback", c'est à dire à rétroaction distribuée) fonctionnant à 1550 nm. La sortie de la diode est fibrée et un isolateur de Faraday placé en sortie de la diode évite les retours.

Un séparateur d'impulsions 21 est prévu pour produire les impulsions signal qui vont porter l'information quantique à transmettre au récepteur et les impulsions oscillateur local, nécessaires à la détection homodyne dans le récepteur.

Le séparateur 21 est ainsi un coupleur optique à maintien de polarisation, typiquement disposé en sortie du modulateur d'amplitude (non représenté) de la source 20. Il envoie sur une première voie 22, les impulsions signal et sur une deuxième voie 23, les impulsions oscillateur local. Le séparateur est asymétrique, pour fournir des impulsions signal faibles et des impulsions oscillateur local intenses, ce qui se traduit typiquement par un nombre de photons très supérieur dans les impulsions oscillateur local, typiquement au moins dans un rapport 100, au final. Le nombre de photons dans l'impulsion signal est ajustable, typiquement entre zéro et une centaine de photons. Dans un exemple, le coupleur est du type 90/10 (90% de la puissance optique pour l'oscillateur local, 10% pour le signal). De cette façon, on rend le bruit propre de l'oscillateur local négligeable dans le dispositif de détection homodyne du récepteur.

De préférence, le séparateur optique 21 est un coupleur optique en Y fibré, à maintien de polarisation.

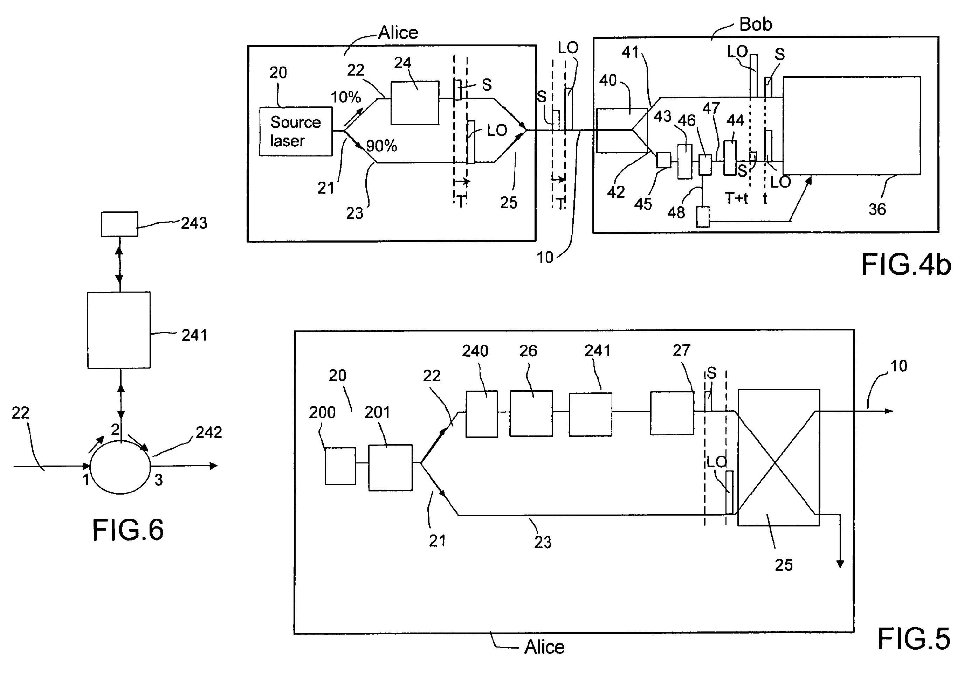

La voie signal 22 comprend un modulateur 24 de la phase et de l'amplitude des impulsions signal qui sera détaillé plus loin, en référence à la figure 5. Pour chaque impulsion, l'état cohérent en sortie du modulateur est donc défini par deux quadratures de valeurs choisies aléatoirement, définies sur une loi de distribution continue, telle qu'une gaussienne de moyenne nulle et de variance prédéfinie. Ces valeurs aléatoires sont en pratique mémorisées par Alice pour chaque impulsion signal. Une ligne à retard 27 dans la voie 22 applique un retard au signal S, par rapport à l'oscillateur local qui transite par la voie 23.

Les impulsions signal et oscillateur local sont ensuite recombinées dans un coupleur 25 qui reçoit les impulsions oscillateur local de la voie oscillateur local 23, et les impulsions signal modulées aléatoirement retardées, de la voie signal 22. Il délivre sur une voie de sortie les impulsions signal S et oscillateur local LO qui sont ainsi multiplexées en temps. La ligne à retard 27 et le coupleur 25 forment ainsi un multiplexeur temporel des impulsions oscillateur local et signal.

Le récepteur Bob selon l'invention est défini pour limiter les pertes de tous les éléments jouant un rôle dans la détection, car les pertes dégradent le rapport signal sur bruit, qui conditionne directement la sécurité du protocole.

Il comprend un démultiplexeur temporel 31 pour envoyer les impulsions sur une première voie 32 ou une deuxième voie 33.

Un détecteur homodyne 36 reçoit les deux voies 32 et 33 en entrée, et fournit en sortie une mesure d'une quadrature de chaque état cohérent impulsionnel constituant le signal. L'une des voies, dans l'exemple la voie 32, comprend un modulateur de phase aléatoire 34, et une ligne à retard 35. Le modulateur de phase aléatoire permet la sélection aléatoire de la quadrature qui est mesurée dans le détecteur homodyne 36. La ligne à retard 35 permet de resynchroniser les impulsions entre les deux voies 32 et 33. Elle est en pratique déterminée pour introduire le retard initié par l'émetteur entre les impulsions signal et oscillateur local.

De préférence, le récepteur comprend en outre un contrôleur de polarisation 30 des impulsions reçues sur la fibre 10 connectée en entrée, pour corriger les éventuels effets de dépolarisation liés à la propagation dans une fibre télecom standard.

Une première variante de réalisation du démultiplexage temporel et de la détection est détaillée sur la figure 2. Dans ce mode de réalisation, le démultiplexeur temporel 31 est un composant optique actif, typiquement un commutateur optique, qui aiguille les impulsions signal et oscillateur local, sur une voie respective, dans l'exemple les impulsions signal sur la voie 33 et les impulsions oscillateur local sur l'autre voie 32. Un commutateur en optique intégrée offre l'aiguillage rapide nécessaire, la commutation devant se faire pendant le temps séparant l'oscillateur local du signal, typiquement de l'ordre de 50 nanosecondes. En pratique, une petite partie de l'oscillateur local est prélevée pour synchroniser la commutation, par exemple par un couplage de type 90/10 sur la voie oscillateur local.

De préférence, la modulation de phase et la ligne à retard sont prévues sur la voie 32 qui véhicule les impulsions oscillateur local, de manière à perturber le moins possible le signal porteur de l'information quantique. En pratique, elle est réalisée par une fibre à maintien de polarisation de longueur donnée.

La ligne à retard 35 permet de retarder l'oscillateur local, de manière à compenser exactement le retard du signal (initié dans l'émetteur) sur l'oscillateur local.

Les impulsions de l'oscillateur local sont appliquées à un modulateur de phase aléatoire, qui permet de sélectionner aléatoirement pour chaque impulsion, la quadrature sur laquelle la détection homodyne va se faire. A la sortie des voies 32 et 33, l'oscillateur local LO et le signal S sont synchrones. Ils sont appliqués au dispositif de détection homodyne 36 en régime impulsionnel.

Ce dernier comprend principalement un mélangeur optique 360, typiquement un coupleur optique fibré 50/50 à faibles pertes d'insertion, un dispositif d'équilibrage des voies 361, une photodiode par voie, référencées 362 et 363 sur la figure et un dispositif électronique de mesure 364 qui fournit une mesure de la quadrature du signal sélectionnée. Cette quadrature est proportionnelle à la quadrature envoyée par Alice augmentée du bruit quantique de l'impulsion. Les éléments du dispositif d'équilibrage 361 sont choisis de manière à minimiser le bruit ajouté.

Le dispositif d'équilibrage des voies 361 comprend notamment des atténuateurs fins et des coupleurs variables, associés à de l'électronique de commande programmable ou réglable.

Le dispositif électronique de mesure comprend notamment un dispositif d'amplification à bas bruit des signaux de détection, connecté en sortie des photodiodes.

Selon le principe de la détection homodyne, l'oscillateur local étant beaucoup plus intense que le signal, les fluctuations de l'oscillateur local se traduisent alors par des corrélations entre les deux voies, qui disparaissent à la détection si celle-ci est bien équilibrée. Il est ainsi possible de mesurer des signaux extrêmement faibles et de mettre en évidence les effets quantiques. Le dispositif de détection fournit ainsi en sortie M une chaîne de variables gaussiennes corrélées au signal S envoyé par l'émetteur.

Des moyens de traitement numérique non représentés assure la mémorisation de ces informations utilisées dans les protocoles de réconciliation et d'amplification de confidentialité pour élaborer la clé secrète.

En pratique, les éléments du dispositif de détection sont déterminés pour que le temps de réponse de ce dispositif soit court devant l'intervalle de temps séparant deux impulsions; la réponse impulsionnelle du dispositif doit ainsi être quasiment nulle à l'arrivée de l'impulsion suivante. Par exemple, pour des impulsions émises avec un taux de répétition de 1 mégahertz, la bande passante du dispositif doit typiquement être de 10 mégahertz.

En régime impulsionnel, les effets d'un déséquilibre sur une détection homodyne sont beaucoup plus importants qu'en régime continu. Le montage optique et l'électronique du détecteur sont donc soigneusement déterminés pour que l'essentiel des fluctuations des impulsions de signal à détecter soient dues au bruit quantique. Ainsi, le détecteur est conçu pour limiter au maximum les effets des dérives thermiques. Notamment les photodiodes sont choisies pour avoir des réponses quasi-identiques ou le plus proche possible, et pour avoir une efficacité quantique maximale. Elles peuvent être fibrées.

L'utilisation d'un mélangeur optique fibré, permet d'assurer un bon équilibrage optique des deux voies de sortie. Le dispositif d'équilibrage 361, comprend des atténuateurs et/ou des coupleurs variables et une électronique de réglage, dont il convient de réduire le bruit au maximum. Le dispositif électronique de mesure 364 comprend des amplificateurs à très faible bruit. Ce sont de préférence des amplificateurs de charge, pour s'affranchir du bruit thermique de l'impédance d'entrée des amplificateurs de tension.

Le récepteur comprend de préférence un contrôleur de polarisation 30. Un contrôleur de polarisation comprend de façon habituelle un polarimètre 302 qui analyse la polarisation des impulsions pour mesurer une dérive (lente) de cette polarisation et appliquer une correction par un correcteur de polarisation 301, typiquement un élément biréfringent.

Selon une première variante représentée sur la figure 2, le polarimètre est disposé entre le correcteur de polarisation 301, en entrée du récepteur, et le commutateur optique 31. Il prélève une petite partie des impulsions reçues, pour analyser leur polarisation, et déterminer une correction par rapport à une référence de polarisation donnée par l'axe propre de polarisation du commutateur optique 31. Dans cette variante, le prélèvement par le polarimètre d'une partie des impulsions entraîne des pertes sur le signal.

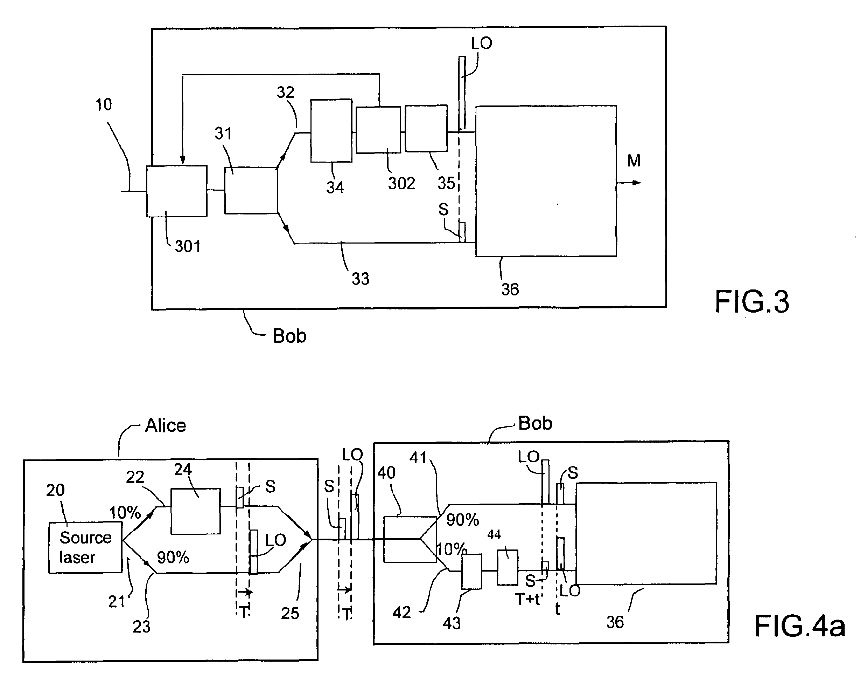

Selon une deuxième variante représentée à la figure 3, le polarimètre est disposé sur la voie 32 de l'oscillateur local. De cette façon le signal n'est pas affecté par les pertes du polarimètre.

On notera que dans ces deux variantes, la place du modulateur de phase et de la ligne à retard local dans la voie 32 est indifférente et peut être changée.

La ligne à retard est définie pour compenser le retard initié par l'émetteur.

La figure 4a illustre un autre mode de réalisation du dispositif de détection utilisé pour le système de distribution quantique de clé à variables aléatoires.

Pour pouvoir utiliser ce type de détection, il est nécessaire qu'Alice envoie alternativement les impulsions signal et les impulsions oscillateur local dans la ligne de transmission 10. De plus, deux impulsions successives doivent être séparées de la même durée T.

Une différence principale réside dans le démultiplexage temporel qui est réalisé non plus de manière active, par un commutateur optique comme dans le mode de réalisation illustré aux figures 2 et 3, mais par un circuit passif, typiquement un coupleur optique.

Le récepteur Bob comprend ainsi un coupleur optique 40, qui envoie les impulsions d'entrée sur une voie 41 ou une autre voie 42. Les impulsions signal et oscillateur local ne sont plus séparées. On les retrouve sur les deux voies, comme illustré sur la figure 4a.

Comme précédemment, dans les figures 2 et 3, une voie comprend un modulateur de phase 43 et une ligne à retard 44.

La ligne à retard est calibrée pour qu'en pratique chaque impulsion signal, respectivement oscillateur local, sur la voie 41, soit synchronisée avec l'impulsion "complémentaire" oscillateur local, respectivement signal, de la voie 42. La ligne à retard prend en compte le décalage temporel T entre les impulsions signal et oscillateur local initié par l'émetteur Alice et le retard entre les deux voies 42 et 41.

Le récepteur, Bob, module aléatoirement la phase de chaque impulsion qu'il reçoit, signal ou oscillateur local, en sorte de sélectionner la quadrature sur laquelle la mesure doit être effectuée par le dispositif de détection 36.

Si le coupleur optique 40 est du type 50/50, la puissance lumineuse des impulsions est réduite de moitié sur les deux voies. Pour obtenir la mesure complète de l'information quantique, il est ainsi nécessaire de combiner deux mesures de détection successives. Typiquement, si la première mesure est faite à l'instant t, la mesure suivante à l'instant t+T doit être combinée à la première pour fournir l'information associée à une impulsion de signal S.

Le contrôle de polarisation peut être identique à celui présenté pour le dispositif précédent, en relation avec les figures 2 et 3.

Sur la figure 4b,on a illustré une autre alternative, qui permet de se passer du contrôle de polarisation.

Dans cette alternative, le coupleur passif 40 utilisé pour le démultiplexage est choisi insensible à la polarisation. Le seul élément du récepteur qui dépende de la polarisation est alors le modulateur de phase 43.

On prévoit de rendre le modulateur de phase indépendant de la polarisation, pour rendre l'ensemble de la détection insensible à la polarisation.

Un polariseur 45 est placé en entrée du modulateur de phase 43 et un coupleur symétrique 46 (50/50) est placé en sortie du modulateur de phase. Une voie de sortie 47 passe par la ligne à retard 44, vers le circuit 36 de détection homodyne. L'autre voie de sortie 48 du coupleur 46, est une voie qui permet de mesurer l'intensité de l'oscillateur local, typiquement au moyen d'une photodiode, ce qui permet au détecteur 36 de calibrer le résultat de la mesure de quadrature de chaque impulsion signal par traitement numérique.

Dans une variante, le coupleur 40 du récepteur illustré à la figure 4a et à la figure 4b est choisi asymétrique, par exemple, dans un rapport 90/10. La voie la plus atténuée est la voie 42 sur laquelle on applique la modulation de phase aléatoire et la resynchronisation (ligne à retard). La majeure partie des impulsions de signal passe par la voie 41. L'information quantique n'est donc pas ou très peu altérée. Dans ce cas, il est possible de ne faire qu'une seule mesure, correspondant à la plus grande amplitude de l'impulsion signal à condition de pouvoir tolérer la perte de l'impulsion signal atténuée, et le bruit additionnel correspondant. Il faut toutefois augmenter fortement l'intensité de l'oscillateur local envoyé par Alice pour compenser les pertes du coupleur 40.

Ce système de démultiplexage par couplage entre les deux voies décrit en relation avec la figure 4a et la figure 4b nécessite un calibrage très précis, par l'émetteur Alice, de l'intervalle de temps T entre deux impulsions signal et oscillateur local successives sur sa voie de sortie. Ainsi, l'émetteur doit inclure une ligne à retard calibrée pour imposer cet intervalle T de façon précise. Cet aspect sera détaillé plus loin en liaison avec la figure 5. En pratique T peut être de l'ordre de quelques dizaines de nanosecondes, compatible avec les possibilités de résolution en temps du détecteur homodyne 36 du récepteur.

Les éléments du récepteur dans les différentes configurations envisagées sont prévus de préférence en optique intégrée et fibrés, par des fibres à maintien de polarisation. Le récepteur utilise ainsi des éléments optiques standard de la télécommunication optique cohérente, mais soigneusement choisis et dans une configuration qui permet d'obtenir la limitation au bruit quantique désirée et la minimisation des pertes.

La figure 5 illustre un émetteur Alice qui peut être avantageusement utilisé dans l'invention, à éléments d'optique intégrée, fibrés.

La source d'impulsions lumineuses intenses 20 comprend dans l'exemple une diode laser 200 dont la sortie est fibrée, émettant un faisceau laser polarisé de grande pureté spectrale atténué fortement pour produire un faisceau de quelques dizaines de milliwatts. Un isolateur de Faraday est prévu en sortie de la diode pour éviter les retours (non représenté). La source 20 comprend aussi un modulateur d'amplitude 201, pour découper le faisceau en impulsions très fines (dont la largeur temporelle peut être aussi fine que quelques nanosecondes par exemple) à haute cadence. Ledit modulateur a une dynamique d'au moins 30 dB en intensité pour permettre ensuite une modulation d'amplitude avec une grande dynamique d'échantillonnage. Cet aspect a déjà été détaillé précédemment en relation avec la figure 1.

Un coupleur optique asymétrique 21, typiquement un coupleur 90/10, permet de séparer les impulsions, en des impulsions intenses d'un oscillateur local, sur la voie 23, et des impulsions faibles de signal sur la voie 22. Le coupleur est du type à maintien de polarisation (c'est à dire qu'il est formé par des fibres à maintien de polarisation).

Le modulateur aléatoire en phase et en amplitude 24 comprend typiquement un modulateur aléatoire d'amplitude 240 et un modulateur aléatoire de phase 241. Ils sont réalisés de préférence à base d'optique intégrée, afin de disposer de grandes bandes passantes, typiquement de l'ordre de la dizaine de gigahertz, et de performances élevées (c'est à dire avec de faibles pertes internes). Afin d'obtenir une grande dynamique de modulation, le modulateur d'amplitude a au moins une dynamique de 30 dB en intensité, et le modulateur de phase une dynamique d'au moins 180° sur la phase.

Les éléments sont choisis pour que les pertes d'insertion soient aussi faibles que possible.

Dans un perfectionnement, on prévoit un contrôleur de polarisation 26, disposé entre le modulateur aléatoire d'amplitude 240 et le modulateur aléatoire de phase 241. Si l'ordre des modulateurs est indifférent en théorie, en pratique il est préférable de mettre d'abord le modulateur d'amplitude ce qui permet d'avoir une polarisation bien définie en entrée du modulateur de phase 241. Ce contrôleur permet de compenser (corriger) les éventuels défauts d'alignement entre les axes propres des fibres à maintien de polarisation, et les axes propres des modulateurs 240 et 241.

Ces défauts d'alignement peuvent également être compensés en associant au modulateur de phase 241, un circulateur optique 242 et un miroir de Faraday 243. Il n'est alors pas nécessaire de placer un contrôleur de polarisation à l'entrée du modulateur de phase 241. La modulation de phase est alors assurée par un ensemble représenté sur la figure 6, composé du circulateur optique (242), placé sur la voie 22 de transmission des impulsions signal, et du modulateur de phase (241) avec le miroir de Faraday (243). Cet ensemble fonctionne alors comme suit : l'impulsion signal sur la voie 22 entre par la voie 1 du circulateur 242, puis elle effectue un aller-retour dans le modulateur de phase 241. Entre l'aller et le retour, l'impulsion se réfléchit sur le miroir de Faraday 243 placé en sortie du modulateur. Celui-ci fait faire une rotation de 90° à la polarisation de l'impulsion. L'impulsion effectue un second trajet dans le modulateur. Les défauts vus à l'aller sont alors compensés par ceux vus au retour. L'impulsion ressort par la voie 3 du circulateur.

Les modulateurs sont commandés à partir des valeurs aléatoires de phase et d'amplitude désirées, typiquement codées sur n bits, n par exemple de l'ordre de 11 à 16 bits, fournies par un générateur aléatoire. La distribution résultante dans le plan complexe est une loi de distribution continue, typiquement une gaussienne polaire de moyenne nulle et de variance prédéfinie.

Ces valeurs aléatoires sont transformées par une fonction logicielle appropriée en des tensions de commande électrique, de manière à éliminer les défauts (non-linéarités ou décalages) de la réponse phase-tension du modulateur de phase 241. Les réglages des modulateurs de phase et d'amplitude 241 et 240 sont optimisés pour obtenir une réponse la plus linéaire possible entre la commande électrique et la modulation de l'impulsion optique.

Enfin, une ligne à retard 27 est prévue pour retarder chaque impulsion signal par rapport à l'impulsion "correspondante" de l'oscillateur local, d'un intervalle prédéterminé. Typiquement, pour ajouter un retard de 50 nanosecondes, on prévoira une fibre à maintien de polarisation d'une longueur de l'ordre de 10 mètres.

Dans le cas d'un système avec un récepteur conforme au deuxième mode de réalisation illustré sur la figure 4a et la figure 4b, la précision sur le retard T est obtenue en ajustant la longueur de fibre de manière fine.

On notera que l'invention s'applique dans le cas particulier d'un système de type "plug and play" selon la terminologie anglo-saxone usuelle, et qui correspond à une configuration du système dans laquelle la source est intégrée non plus à l'émetteur, mais avec la partie détection dans le récepteur. Dans ce cas, les impulsions effectuent un aller-retour dans la fibre de communication entre l'émetteur et le récepteur.

Un système de distribution quantique de clé à variables continues selon l'invention est simple de mise en oeuvre et facilement intégrable à un système de télécommunication optique cohérente, utilisant des fibres optiques standards du commerce. Ce système est basé sur un dispositif de communication qui peut fonctionner à la longueur d'onde dite télécom de 1550 nanomètres, qui peut être entièrement réalisé avec des composants télécoms disponibles, et qui permet de :
- produire un signal constitué d'un état cohérent : impulsion lumineuse limitée par le bruit quantique,
- produire un oscillateur local ayant une relation de phase définie avec le signal,
- moduler le signal à la fois en amplitude et en phase,
- transmettre l'oscillateur local et le signal dans une même fibre en préservant leur relation de phase, par multiplexage temporel,
- séparer l'oscillateur local du signal à la réception,
- mesurer une quadrature aléatoire du signal ainsi que son bruit propre, par détection homodyne limitée par le bruit quantique.

## Revendications

1. Système de distribution quantique de clé de cryptage à variables continues, comprenant un émetteur (Alice) et un récepteur (Bob), l' émetteur étant apte à choisir de manière aléatoire la phase et l'amplitude de chaque impulsion de lumière cohérente d'un signal (S), pour fournir un état cohérent défini par une première quadrature et une deuxième quadrature aléatoires, et à transmettre au récepteur (Bob) les impulsions signal (S) et un oscillateur local (LO), ledit oscillateur local servant de référence de phase par rapport à laquelle la phase du signal est définie, les impulsions oscillateur local étant grandes devant les impulsions signal, le récepteur comprenant un détecteur homodyne (36) effectuant une mesure limitée par le bruit quantique pour mesurer une quadrature choisie aléatoirement d'une impulsion de signal, **caractérisé en ce que**
- l'émetteur comprend un dispositif de multiplexage temporel (27, 25) des impulsions du signal (S) et de l'oscillateur local (LO) pour assurer la transmission sur une fibre optique (10) des impulsions signal et oscillateur local vers le récepteur ; et **en ce que**
- le récepteur comprend :
- un démultiplexeur (31), apte à envoyer les impulsions reçues, sur une première voie (32), ou sur une deuxième voie (33), lesdites voies étant appliquées en entrées du détecteur homodyne (36) ;
- l'une desdites première et deuxième voies comprenant :
un modulateur de phase (34), permettant une sélection aléatoire par le détecteur homodyne d'une quadrature parmi la première et la deuxième quadratures d'un état cohérent d'une impulsion de signal ; et
une ligne à retard (35 ), pour resynchroniser les impulsions de signal et de l'oscillateur local.

2. Système de distribution quantique de clé selon la revendication 1, **caractérisé en ce que** le démultiplexeur est un commutateur optique (31) apte à séparer les impulsions de signal et les impulsions oscillateur local, pour envoyer respectivement les impulsions de signal (S) sur une voie (33) et les impulsions oscillateur local (LO) sur l'autre voie (32), et **en ce que** le modulateur de phase (34) et la ligne à retard (35) sont prévus sur la voie (32) associée aux impulsions oscillateur local.

3. Système de distribution quantique de clé selon la revendication 1, **caractérisé en ce que** le dispositif de multiplexage temporel (25) est tel qu'il impose un intervalle T de temps prédéterminé entre une impulsion oscillateur local et une impulsion signal successives et **en ce que** le démultiplexeur est un coupleur optique (40) apte à envoyer les impulsions reçues en entrée sur une première voie (41) ou une deuxième voie (42), l'une des voies comprenant le modulateur de phase (43) et la ligne à retard (44), et **en ce que** ladite ligne à retard est calibrée pour imposer un retard égal au dit intervalle de temps prédéterminé T entre une impulsion signal, respectivement oscillateur local sur une voie, et une impulsion oscillateur local, respectivement signal sur l'autre voie.

4. Système de distribution quantique selon la revendication 3, **caractérisé en ce que** ledit coupleur (40) est du type symétrique.

5. Système de distribution quantique selon la revendication 3, **caractérisé en ce que** ledit coupleur (40) est du type asymétrique, pour fournir la majeure partie du signal sur la voie sans modulateur de phase (42) et une faible partie du signal sur la voie comprenant le modulateur de phase (43).

6. Système de distribution quantique selon l'une des revendications 3 à 5, **caractérisé en** en ce que le détecteur homodyne (36) effectue pour chaque impulsion détectée une première mesure à un instant t et une deuxième mesure à un instant t + T, pour obtenir, pour chaque impulsion de signal, une mesure complète de la quadrature choisie.

7. Système de distribution quantique à variables continues selon l'une quelconque des revendications précédentes, **caractérisé en ce que** le récepteur comprend un contrôleur de polarisation (30) comprenant un dispositif correcteur de polarisation (301) et un polarimètre (302), lequel polarimètre effectue une mesure d'état de polarisation des impulsions reçues par le récepteur pour commander une correction appropriée sur ledit dispositif correcteur de polarisation.

8. Système de distribution quantique de clé à variables continues selon la revendication 7, **caractérisé en ce que** ledit polarimètre (301) est disposé entre le dispositif correcteur (300) et le commutateur optique (31), sur une même voie optique.

9. Système de distribution quantique de clé selon l'une quelconque des revendications 3 à 6, **caractérisé en ce qu'**il comprend un polariseur (45) disposé en entrée du modulateur de phase (43) et un coupleur symétrique (46) en sortie, ledit coupleur fournissant une sortie (48) de mesure de l'oscillateur local, permettant au dispositif de détection (36) de calibrer la mesure de quadrature de chaque impulsion signal.

10. Système de distribution quantique de clé à variables continues selon la revendication 7, **caractérisé en ce que** dans le récepteur, ledit polarimètre (301) est disposé après le démultiplexeur (31), sur la voie comprenant le modulateur de phase (34).

11. Système de distribution quantique de clé à variables continues selon l'une quelconque des revendications précédentes, **caractérisé en ce que** le détecteur homodyne (36) comprend un dispositif d'équilibrage (361) des voies d'entrée dont les éléments sont choisis de manière à minimiser le bruit ajouté.

12. Système de distribution quantique de clé à variables continues selon l'une quelconque des revendications précédentes 1 à 11, **caractérisé en ce que** les éléments du récepteur sont chacun réalisés à base d'optique intégrée et sont connectés entre eux par des fibres à maintien de polarisation.

13. Système de distribution quantique de clé à variables continues selon l'une quelconque des revendications 1 à 11, **caractérisé en ce qu'**il comprend une source (20) d'impulsions de lumière cohérente intégrée à l'émetteur ou au récepteur, pour fournir les impulsions signal et oscillateur local et ladite source d'impulsion comprenant une source (200) d'un faisceau laser atténué polarisé, associée à un modulateur d'amplitude (201) apte à découper ledit faisceau en impulsions de lumière cohérente, ledit modulateur ayant une dynamique d'au moins 30 dB en intensité.

14. Système de distribution quantique de clé à variables continues selon la revendication 13, **caractérisé en ce que** la source d'impulsions (20) est intégrée à l'émetteur, ledit émetteur comprenant en outre un coupleur optique (21) à maintien de polarisation entre la dite source et une voie oscillateur local (23) et une voie signal (22), ledit coupleur optique étant disposé après le modulateur d'amplitude de découpage du faisceau, et **en ce que** la voie signal comprend ledit dispositif (24) de modulation aléatoire de phase et d'amplitude et une ligne à retard (27).

15. Système de distribution quantique de clé selon la revendication 14, **caractérisé en ce que** le dispositif de modulation aléatoire (24) dudit émetteur comprend un modulateur aléatoire d'amplitude (240) et un modulateur aléatoire de phase (241) en optique intégrée, les dits modulateurs étant connectés par des fibres à maintien de polarisation, et **en ce qu'**un contrôleur de polarisation (26) est disposé sur la voie signal, pour compenser des défauts d'alignements entre les axes propres desdites fibres à maintien de polarisation et desdits modulateurs d'amplitude et de phase.

16. Système de distribution quantique de clé selon la revendication 14, **caractérisé en ce que** ledit modulateur aléatoire de phase (241) est associé à un circulateur optique (242) et un miroir de faraday (243), ledit circulateur optique étant disposé sur la voie signal (22) et le modulateur de phase et le miroir de Faraday étant tels qu'une impulsion signal entrant par une voie d'entrée (1) du circulateur, effectue un aller-retour dans le modulateur, avec une réflexion sur le miroir de Faraday entre l'aller et le retour, avant de ressortir par une voie de sortie (3) du circulateur, sur la voie signal (22).

17. Système de télécommunication cohérente, **caractérisé en ce qu'**il comprend au moins un émetteur et un récepteur d'un système de distribution quantique de clé selon l'une quelconque des revendications 1 à 16, lesdits émetteur et récepteur étant raccordés par une fibre de télécommunication optique standard.

## Claims

1. Continuous variable quantum encryption key distribution system, comprising a sender (Alice) and a receiver (Bob), the sender able to randomly choose the phase and the amplitude of each coherent light pulse of a signal (S), to provide a coherent state defined by a first quadrature and a second quadrature that are random, and to transmit to the receiver (Bob) the signal pulses (S) and a local oscillator (LO), said local oscillator serving as a phase reference relative to which the phase of the signal is defined, the local oscillator pulses being great compared to the signal pulses, the receiver comprising a homodyne detector (36) performing a measurement limited by the quantum noise to measure a randomly chosen quadrature of a signal pulse, **characterized in that**
- the sender comprises a device for time-division multiplexing (27, 25) the pulses of the signal (S) and of the local oscillator (LO) to handle the transmission over an optical fiber (10) of the signal and local oscillator pulses to the receiver; and **in that**
- the receiver comprises:
- a demultiplexer (31), able to send the received pulses over a first channel (32), or over a second channel (33), said channels being applied as inputs to the homodyne detector (36);
- one of said first and second channels comprising:
a phase modulator (34), enabling a random selection by the homodyne detector of a quadrature from the first and the second quadratures of a coherent state of a signal pulse; and
a delay line (35), for resynchronizing the signal and local oscillator pulses.

2. Quantum key distribution system according to Claim 1, **characterized in that** the demultiplexer is an optical switch (31) able to separate the signal pulses and the local oscillator pulses, to respectively send the signal pulses (S) over one channel (33) and the local oscillator pulses (LO) over the other channel (32), and **in that** the phase modulator (34) and the delay line (35) are provided on the channel (32) associated with the local oscillator pulses.

3. Quantum key distribution signal according to Claim 1, **characterized in that** the time-division multiplexing device (25) is such that it imposes a predetermined time interval T between a local oscillator pulse and a signal pulse that succeed each other and **in that** the demultiplexer is an optical coupler (40) able to send the pulses received as input over a first channel (41) or a second channel (42), one of the channels comprising the phase modulator (43) and the delay line (44), and **in that** said delay line is calibrated to impose a delay equal to said predetermined time interval T between a signal pulse, respectively local oscillator pulse, on one channel, and a local oscillator pulse, respectively signal pulse, on the other channel.

4. Quantum distribution system according to Claim 3, **characterized in that** said coupler (40) is of the symmetrical type.

5. Quantum distribution system according to Claim 3, **characterized in that** said coupler (40) is of the asymmetrical type, to supply the major part of the signal to the channel without phase modulator (42) and a small part of the signal to the channel including the phase modulator (43).

6. Quantum distribution system according to one of Claims 3 to 5, **characterized in that** the homodyne detector (36) performs, for each pulse detected, a first measurement at an instant t and a second measurement at an instant t+T, to obtain, for each signal pulse, a complete measurement of the chosen quadrature.

7. Continuous variable quantum distribution system according to any one of the preceding claims, **characterized in that** the receiver comprises a polarization controller (30) comprising a polarization corrector device (301) and a polarimeter (302), which polarimeter performs a polarization state measurement of the pulses received by the receiver to order an appropriate correction on said polarization corrector device.

8. Continuous variable quantum key distribution system according to Claim 7, **characterized in that** said polarimeter (301) is positioned between the corrector device (300) and the optical switch (31), on one and the same optical channel.

9. Quantum key distribution system according to any one of Claims 3 to 6, **characterized in that** it comprises a polarizer (45) positioned at the input of the phase modulator (43) and a symmetrical coupler (46) at the output, said coupler providing a measurement output (48) for the local oscillator, enabling the detection device (36) to calibrate the quadrature measurement of each signal pulse.

10. Continuous variable quantum key distribution system according to Claim 7, **characterized in that**, in the receiver, said polarimeter (301) is positioned after the demultiplexer (31), on the channel that includes the phase modulator (34).

11. Continuous variable quantum key distribution system according to any one of the preceding claims, **characterized in that** the homodyne detector (36) comprises a device (361) for balancing the input channels, the elements of which are chosen so as to minimize the added noise.

12. Continuous variable quantum key distribution system according to any one of Claims 1 to 11, **characterized in that** the elements of the receiver are each implemented on an integrated optical basis, and are interconnected by polarization-holding fibers.

13. Continuous variable quantum key distribution system according to any one of Claims 1 to 11, **characterized in that** it comprises a source (20) of coherent light pulses incorporated in the sender or in the receiver, to provide the signal and local oscillator pulses and said pulse source comprising a source (200) of a polarized attenuated laser beam, associated with an amplitude modulator (201) able to divide up said beam into coherent light pulses, said modulator having a dynamic range of at least 30 dB in intensity.

14. Continuous variable quantum key distribution system according to Claim 13, **characterized in that** the pulse source (20) is incorporated in the sender, said sender also comprising a polarization-holding optical coupler (21) between said source and a local oscillator channel (23) and a signal channel (22), said optical coupler being positioned after the beam dividing amplitude modulator, and **in that** the signal channel comprises said random phase and amplitude modulation device (24) and a delay line (27).

15. Quantum key distribution system according to Claim 14, **characterized in that** the random modulation device (24) of said sender comprises a random amplitude modulator (240) and a random phase modulator (241) in integrated optical form, said modulators being connected by polarization-holding fibers, and **in that** a polarization controller (26) is positioned on the signal channel, to compensate the alignment defects between the natural axes of said polarization-holding fibers and said amplitude and phase modulators.

16. Quantum key distribution system according to Claim 14, **characterized in that** said random phase modulator (241) is associated with an optical circulator (242) and a Faraday mirror (243), said optical circulator being positioned on the signal channel (22) and the phase modulator and the Faraday mirror being such that a signal pulse incoming via an input channel (1) of the circulator performs a round trip in the modulator, with a reflection on the Faraday mirror between the outward and return legs, before leaving again via an output channel (3) of the circulator, on the signal channel (22).

17. Coherent telecommunication system, **characterized in that** it comprises at least one sender and one receiver of a quantum key distribution system according to any one of Claims 1 to 16, said sender and receiver being connected by a standard optical telecommunication fiber.

## Patentansprüche

1. System zum Quanten-Verschlüsselungsschlüssel-Austausch mit kontinuierlichen Variablen, das einen Sender (Alice) und einen Empfänger (Bob) enthält, wobei der Sender ausgelegt ist, um auf zufällige Weise die Phase und die Amplitude jedes kohärenten Lichtimpulses eines Signals (S) zu wählen, um einen kohärenten Zustand zu liefern, der durch eine erste Quadratur und eine zweite Quadratur, die zufällig sind, definiert ist, und um zu dem Empfänger (Bob) die Signalimpulse (S) zu senden, und einen Hilfsoszillator (LO) enthält, wobei der Hilfsoszillator als Phasenreferenz dient, in Bezug auf die die Phase des Signals definiert ist, wobei die Hilfsoszillatorimpulse gegenüber den Signalimpulsen groß sind, wobei der Empfänger einen homodynen Detektor (36) enthält, der eine durch das Quantenrauschen begrenzte Messung ausführt, um eine zufällig gewählte Quadratur eines Signalimpulses zu messen, **dadurch gekennzeichnet, dass**
- der Sender eine Zeitmultiplexvorrichtung (27, 25) für die Signalimpulse (S) und die Hilfsoszillatorimpulse (LO) enthält, um die Übertragung der Signal- und Hilfsoszillatorimpulse zu dem Empfänger auf einer Lichtleitfaser (10) zu gewährleisten; und dass
- der Empfänger enthält:
- einen Demultiplexer (31), der die empfangenen Impulse auf einem ersten Weg (32) oder auf einem zweiten Weg (33) schicken kann, wobei die Wege zu den Eingängen des homodynen Detektors (36) führen;
- wobei entweder der erste oder der zweite Weg enthält:
einen Phasenmodulator (34), der eine zufällige Auswahl einer Quadratur unter der ersten und der zweiten Quadratur eines kohärenten Zustandes eines Signalimpulses durch den homodynen Detektor ermöglicht; und
eine Verzögerungsleitung (35), um die Signal- und Hilfsoszillatorimpulse wieder zu synchronisieren.

2. Quanten-Schlüsselaustausch-System nach Anspruch 1, **dadurch gekennzeichnet, dass** der Demultiplexer ein optischer Kommutator (31) ist, der die Signal- und Hilfsoszillatorimpulse trennen kann, um die Signalimpulse (S) auf einem Weg (33) und die Hilfsoszillatorimpulse (LO) auf dem anderen Weg (32) zu senden, und dass der Phasenmodulator (34) und die Verzögerungsleitung (35) in dem Weg (32) vorgesehen sind, der den Hilfsoszillatorimpulsen zugeordnet ist.

3. Quanten-Schlüsselaustausch-System nach Anspruch 1, **dadurch gekennzeichnet, dass** die Zeitmultiplexvorrichtung (25) derart ist, dass sie ein vorgegebenes Zeitintervall T zwischen einen Hilfsoszillatorimpuls und einen Signalimpuls, die aufeinanderfolgen, einfügt und dass der Demultiplexer ein optischer Koppler (40) ist, der die am Eingang empfangenen Impulse auf einem ersten Weg (41) oder auf einem zweiten Weg (42) versenden kann, wobei einer der Wege den Phasenmodulator (43) und die Verzögerungsleitung (44) enthält, und dass die Verzögerungsleitung so kalibriert ist, dass sie eine Verzögerung, die gleich dem vorgegebenen Zeitintervall T ist, zwischen einen Signalimpuls bzw. Hilfsoszillatorimpuls auf einem Weg und einen Hilfsoszillatorimpuls bzw. Signalimpuls auf dem anderen Weg einfügt.

4. Quantenaustauschsystem nach Anspruch 3, **dadurch gekennzeichnet, dass** der Koppler (40) vom symmetrischen Typ ist.

5. Quantenaustauschsystem nach Anspruch 3, **dadurch gekennzeichnet, dass** der Koppler (40) vom asymmetrischen Typ ist, um den größten Teil des Signals auf dem Weg ohne Phasenmodulator (42) zu liefern und um einen kleinen Teil des Signals auf dem den Phasenmodulator (43) enthaltenden Weg zu liefern.

6. Quantenaustauschsystem nach einem der Ansprüche 3 bis 5, **dadurch gekennzeichnet, dass** der homodyne Detektor (36) für jeden erfassten Impuls ein erste Messung zu einem Zeitpunkt t und eine zweite Messung zu einem Zeitpunkt t + T ausführt, um für jeden Signalimpuls eine vollständige Messung der gewählten Quadratur zu erhalten.

7. Quantenaustauschsystem mit kontinuierlichen Variablen nach einem der vorhergehenden Ansprüche, **dadurch gekennzeichnet, dass** der Empfänger eine Polarisationssteuereinheit (30) enthält, die eine Polarisationskorrekturvorrichtung (301) und ein Polarimeter (302) enthält, wobei das Polarimeter eine Polarisationszustandsmessung der von dem Empfänger empfangenen Impulse ausführt, um eine geeignete Korrektur an der Polarisationskorrekturvorrichtung zu steuern.

8. Quanten-Schlüsselaustausch-System mit kontinuierlichen Variablen nach Anspruch 7, **dadurch gekennzeichnet, dass** das Polarimeter (301) zwischen der Korrekturvorrichtung (300) und dem optischen Kommutator (31) in demselben optischen Weg angeordnet ist.

9. Quanten-Schlüsselaustausch-System nach einem der Ansprüche 3 bis 6, **dadurch gekennzeichnet, dass** es einen Polarisator (45), der am Eingang des Phasenmodulators (43) angeordnet ist, und einen symmetrischen Koppler (46) am Ausgang enthält, wobei der Koppler einen Messausgang (48) des Hilfsoszillators liefert, der der Erfassungsvorrichtung (36) ermöglicht, die Messung der Quadratur jedes Signalimpulses zu kalibrieren.

10. Quanten-Schlüsselaustausch-System mit kontinuierlichen Variablen nach Anspruch 7, **dadurch gekennzeichnet, dass** in dem Empfänger das Polarimeter (301) in dem Weg, der den Phasenmodulator (34) enthält, hinter dem Demultiplexer (31) angeordnet ist.

11. Quanten-Schlüsselaustausch-System mit kontinuierlichen Variablen nach einem der vorhergehenden Ansprüche, **dadurch gekennzeichnet, dass** der homodyne Detektor (36) eine Ausgleichsvorrichtung (361) für die Eingangswege enthält, deren Elemente so gewählt sind, dass das beigemischte Rauschen minimiert wird.

12. Quanten-Schlüsselaustausch-System mit kontinuierlichen Variablen nach einem der vorhergehenden Ansprüche 1 bis 11, **dadurch gekennzeichnet, dass** die Elemente des Empfängers jeweils auf der Basis einer integrierten Optik verwirklicht sind und untereinander durch polarisationserhaltende Fasern verbunden sind.

13. Quanten-Schlüsselaustausch-System mit kontinuierlichen Variablen nach einem der Ansprüche 1 bis 11, **dadurch gekennzeichnet, dass** es eine Quelle (20) für kohärente Lichtimpulse, die in den Sender oder in den Empfänger integriert ist, enthält, um die Signalimpulse und die Hilfsoszillatorimpulse zu liefern, wobei die Impulsquelle eine Quelle (200) für ein gedämpftes polarisiertes Laserstrahlenbündel enthält, die einem Amplitudenmodulator (201) zugeordnet ist, der das Strahlenbündel in kohärente Lichtimpulse zerhacken kann, wobei der Modulator eine Intensitätsdynamik von wenigstens 30 dB besitzt.

14. Quanten-Schlüsselaustausch-System mit kontinuierlichen Variablen nach Anspruch 13, **dadurch gekennzeichnet, dass** die Impulsquelle (20) in den Sender integriert ist, wobei der Sender außerdem einen optischen Koppler (21) mit Polarisationserhaltung zwischen der Quelle und einem Hilfsoszillatorweg (23) und einem Signalweg (22) enthält, wobei der optische Koppler hinter dem Amplitudenmodulator für die Zerhackung des Strahlenbündels angeordnet ist, und dass der Signalweg die Vorrichtung (24) für zufällige Modulation der Phase und der Amplitude sowie eine Verzögerungsleitung (27) enthält.

15. Quanten-Schlüsselaustausch-System nach Anspruch 14, **dadurch gekennzeichnet, dass** die Zufallsmodulationsvorrichtung (24) des Senders einen Amplituden-Zufallsmodulator (240) und einen Phasen-Zufallsmodulator (241) in integrierter Optik enthält, wobei die Modulatoren durch polarisationserhaltende Fasern verbunden sind, und dass eine Polarisationssteuereinheit (26) auf dem Signalweg angeordnet ist, um Synchronisationsfehler zwischen den Achsen, die zu den polarisationserhaltenden Fasern und den Amplituden- und Phasenmodulatoren gehören, auszugleichen.

16. Quanten-Schlüsselaustausch-System nach Anspruch 14, **dadurch gekennzeichnet, dass** dem Phasen-Zufallsmodulator (241) ein optischer Zirkulator (242) und ein Faraday-Spiegel (243) zugeordnet sind, wobei der optische Zirkulator in dem Signalweg (22) angeordnet ist und der Phasenmodulator und der Faraday-Spiegel so beschaffen sind, dass ein auf dem Eingangsweg (1) des Zirkulators ankommender Signalimpuls in dem Modulator eine Hin- und Herbewegung mit Reflexion an dem Faraday-Spiegel zwischen der Hin- und Herbewegung ausführt, bevor er auf einem Ausgangsweg (3) des Zirkulators diesen auf dem Signalweg (22) verlässt.

17. Kohärentes Telekommunikationssystem, **dadurch gekennzeichnet, dass** es wenigstens einen Sender und einen Empfänger eines Quanten-Schlüsselaustausch-Systems nach einem der Ansprüche 1 bis 16 enthält, wobei der Sender und der Empfänger durch eine Standard-Telekommunikationslichtleitfaser verbunden sind.
